# FASCICULE DE BREVET EUROPEEN

(11) **EP 1 670 728 B1**
(45) Date de publication et mention de la délivrance du brevet: **26.09.2007**
(21) Numéro de dépôt: 04787268.4
(22) Date de dépôt: 30.09.2004
(51) Int. Cl.: C03B 29/08, C03B 23/025, C03B 23/027

(54) **BOMBAGE DE VITRAGE FEUILLETE**
BIEGEN VON VERBUNDENEN GLASSTAFELN
COMPOUND GLASS BOWING

(30) Priorité: 03.10.2003 BE 200300518
(43) Date de publication de la demande: 21.06.2006
(73) Titulaire: GLAVERBEL, 1170 Bruxelles (BE)
(72) Inventeur: LUCCA, Nerio, Glaverbel, B-6040 Jumet (BE); BONVALET, Philippe, Glaverbel, B-6040 Jumet (BE)
(86) Numéro de dépôt international: PCT/EP2004/052386
(87) Numéro de publication internationale: WO 2005/033027

(56) Documents cités:
- EP-A- 0 568 053
- EP-A- 0 706 978
- US-A- 2 725 320
- US-A- 5 234 373

## Description

La présente invention concerne le bombage de vitrages feuilletés et particulièrement les vitrages comportant des couches minces fonctionnelles.

Le bombage des vitrages feuilletés, tels que les pare-brise, est le plus habituellement réalisé les feuilles planes étant disposées sur des cadres ou moules dont la configuration correspond au profil périphérique du vitrage bombé. Les feuilles disposées sur ces cadres sont passées dans un four où elles sont portées à température de ramollissement. Elles se déforment par gravité en venant s'appliquer sur le moule support qui leur confère le profil demandé. Des variantes de ces techniques comprennent notamment, en plus l'effet de pressions au moyen de contre-moules éventuellement limités à certaines parties de la périphérie du vitrage.

Dans ces techniques, on s'efforce de faire en sorte que les feuilles de verre ne soient en contact avec le cadre de bombage (ou avec les contre-moules) qu'à leur périphérie, pour minimiser les traces laissées à leur surface. Ces traces qui ne peuvent pas entièrement être évitées, se situent dans les zones de fixation de ces vitrages sur le châssis du véhicule et ne sont pratiquement pas perceptibles par l'utilisateur.

En dehors de ces parties situées au bord des vitrages, la surface des feuilles est normalement exempte de toute marque provenant du contact du verre ramolli avec un objet quelconque.

Pour constituer le vitrage feuilleté avec deux feuilles parfaitement appariées, on procède systématiquement au bombage simultané de ces deux feuilles. Pour cela, les deux feuilles sont disposées l'une au-dessus de l'autre sur le même cadre de bombage. Dans cette disposition, pour éviter le contact entre les faces des feuilles superposées, une poudre de très fines particules est répandue entre ces deux feuilles. La poudre utilisée est inerte aux conditions de traitement mises en oeuvre, et s'élimine par un simple lavage après le bombage. Il s'agit notamment de poudre de carbonate de calcium. La granulométrie de la poudre introduite est suffisamment fine, quelques dizaines de microns, pour ne laisser aucune trace sur les faces des feuilles en contact par son intermédiaire. Ce mode de formage est décrit par exemple dans US 2,725,320.

L'introduction de couches minces fonctionnelles sur les vitrages nécessite le plus souvent des précautions supplémentaires. Les couches les plus usuelles, notamment pour les pare-brise, sont de type réfléchissant les rayonnements infrarouges. Elles sont composées d'un assemblage comportant une ou plusieurs couches métalliques réfléchissant les I.R., et de couches diélectriques d'oxydes qui protègent les couches métalliques et limitent les réflexions dans le domaine des longueurs d'onde visibles. Les couches métalliques sont formées par des techniques de dépôt sous vide. Ces techniques conduisent à des dépôts d'une grande uniformité sous une très faible épaisseur. Les couches en question sont dans leur ensemble relativement fragiles en particulier aux épreuves thermiques. L'élévation de température au niveau correspondant au ramollissement du verre nécessaire au bombage, peut entraîner des modifications dans la composition ou dans la structure, qui, même très limitées, se traduisent souvent sur l'apparence du vitrage. Ces modifications sont par exemple l'apparition de taches, de moirures ou de colorations parasites, qui rendent ces vitrages impropres à l'usage auquel ils sont destinés.

Les couches en question sont par ailleurs relativement fragiles aux sollicitations mécaniques. Dans les vitrages feuilletés, ceci conduit à les disposer sur les faces internes des feuilles de verre, autrement dit celles qui sont protégées par les feuilles de verre elles-mêmes. Par suite, dans le processus de bombage les couches fonctionnelles sont disposées sur les faces qui sont en contact. En pratique, dans cette position les couches convenablement choisies peuvent supporter les conditions thermiques nécessaires au bombage sans se dégrader pour autant qu'elles restent au contact seulement du verre et des poudres intercalaires de séparation inertes dont il a été question ci-dessus.

Par ailleurs les pare-brise sont à l'heure actuelle systématiquement collés aux châssis des véhicules, notamment pour permettre un montage dit « flush », dans lequel le profil du vitrage se trouve dans la continuité de celui de la carrosserie. Ce mode de fixation nécessite une protection du joint de colle contre les dégradations que pourrait causer l'exposition aux rayonnements W. A cet effet le joint de colle est masqué, ce que l'on réalise traditionnellement, en disposant un bandeau d'émail opaque sur la périphérie du vitrage. Ce bandeau joue également un rôle esthétique en dissimulant le collage qui, à défaut, serait visible à travers le vitrage.

L'utilisation de vitrages fonctionnels fait aussi qu'il est nécessaire de dissimuler le plus possible derrière ces motifs émaillés les éléments qui sont associés à ces fonctions, notamment des conducteurs électriques dans le cas des vitrages comportant des éléments de chauffage du vitrage.

Si à l'origine pour des raisons de commodité de production, les motifs émaillés étaient disposés sur la face désignée traditionnellement "IV", c'est à dire la face tournée vers l'intérieur du véhicule, le besoin de dissimuler ces éléments supplémentaires impose la présence de l'émail sur une face "interne" du feuilleté, et plus précisément sur la face "II" de celui-ci.

La production des motifs émaillés sur les vitrages s'effectue par application d'une composition fluide qui doit faire l'objet d'un séchage et d'une cuisson pour en fixer les constituants. La composition initiale est appliquée par sérigraphie ou par toute autre méthode, notamment par projection de gouttelettes ("ink-jet").

Dans la suite de la description, parlant des motifs émaillés, on fait référence aux motifs de masquage disposés principalement à la périphérie de nombreux vitrages "automobile". La technique selon l'invention concerne néanmoins toutes les compositions d'émail appliquées sur des vitrages. Il s'agit par exemple des compositions destinées à former des fils chauffants et comportant une proportion élevée d'un métal conducteur. Il s'agit aussi des compositions utilisées pour la formation d'antennes incluses dans ces vitrages, et de façon générale de tous les motifs émaillés introduits entre deux feuilles de verre devant subir une opération de bombage.

Le traitement des motifs émaillés est fonction de la composition appliquée. Ces compositions présentent toutes, des éléments de même nature. Il s'agit essentiellement de pigments minéraux associés à une fritte de verre. Ces éléments solides sont mélangés à des solvants et diluants qui donnent la fluidité requise pour l'application. Des composés polymères sont aussi généralement présents qui assurent la fixation temporaire des éléments solides après élimination des solvants et avant la fusion (sintérisation) de la fritte.

Le séchage des motifs correspond à l'élimination des constituants les plus volatiles et permet la stabilisation en vue des manipulations ultérieures. Il est obtenu à des températures peu élevées. Elles sont choisies principalement de façon que l'opération se déroule rapidement. En pratique des températures de 250°C ou moins sont préférées.

L'élimination des liants polymères est réalisée à des températures plus élevées. Cette élimination qui correspond à la destruction des polymères s'accomplit à des températures qui dépassent ordinairement les 200°C. L'élimination est d'autant plus rapide que la température est plus élevée. On peut estimer qu'au-delà de 400°C, la totalité des constituants organiques est détruite et qu'il ne reste que les composants minéraux, fritte et pigments.

Pour des raisons évidentes il est souhaitable de mettre à profit le passage dans les fours de bombage pour assurer les traitements thermiques de la composition d'émaillage, notamment ceux qui requièrent les températures les plus élevées.

Cette pratique usuelle ne soulève pas de difficulté lorsque la composition d'émaillage se situe en face IV. Dans cette position l'émail est sur la face supérieure dans l'opération de bombage. Elle est en contact uniquement avec l'atmosphère du four. Les constituants volatiles sont donc évacués sans difficulté. De même, dans cette position l'émail n'est en contact avec aucun autre élément auquel il pourrait adhérer, le cadre supportant les feuilles se situant au contact de la face 1, et les feuilles de verre reposant l'une sur l'autre par leurs faces Il et III.

Quand l'émail doit être en position II pour les raisons indiquées ci-dessus, on constate à l'usage des difficultés diverses. Les plus apparentes se manifestent vis-à-vis des couches fonctionnelles également présentes. Le bombage par exemple d'une paire de feuilles sur les faces II et III desquelles sont disposées respectivement des motifs émaillés et des couches fonctionnelles de type couche antisolaire et/ou couche chauffante, conduit souvent, à des altérations de la couche fonctionnelle et aussi des motifs émaillés. Les raisons de ces altérations ne sont pas toutes bien déterminées. Des défauts peuvent provenir d'un transfert par contact d'une partie de la composition d'émaillage. Ce transfert est possible tant que le frittage (ou sintérisation) de l'émail n'est pas réalisé. La sintérisation en modifiant la nature de la composition conduit à une structure dont les caractéristiques la rendent beaucoup plus résistante aux températures élevées. La composition devient moins "collante" tout en adhérant fortement à la feuille sur laquelle elle est appliquée. Ces défauts proviennent aussi de l'altération des couches fonctionnelles généralement attribuée à la présence des constituants de la composition d'émaillage qui sont éliminés au cours de leur cuisson. Il s'agit principalement de liants et de résidus de solvants qui produisent une ambiance réductrice néfaste à l'intégrité des couches fonctionnelles aux températures de traitement.

Pour éviter ces défauts, une solution consiste à "pré-cuire" les motifs émaillés dans un four où seules les feuilles comportant les motifs sont introduites. L'opération est globalement très coûteuse. Elle nécessite l'usage de fours qui s'ajoutent à ceux de bombage. Elle impose aussi un cycle supplémentaire de traitement des feuilles à des températures élevées, avec retour de celles-ci à la température ambiante pour permettre la manipulation qui précède la superposition de la feuille portant les motifs émaillés avec celle portant les couches fonctionnelles.

Par ailleurs US 5,324,373 décrit un mode de bombage d'un vitrage feuilleté dans lequel une composition d'émail doit se situer entre les deux feuilles en face II. Selon ce document, dans un premier temps les deux feuilles de verre sont superposées la face portant l'émail étant située sur le dessus. L'émail est cuit dans cette position. L'ordre des deux feuilles est ensuite interverti pour procéder au bombage dans la position qui sera celle des feuilles dans le vitrage final. La manipulation des feuilles au cours du processus introduit une complexité indésirable.

Les inventeurs se sont fixé pour objectif de mettre en oeuvre des techniques de bombage sur cadre pour des vitrages feuilletés, comportant notamment des couches fonctionnelles et des motifs émaillés, permettant d'éviter les défauts des techniques traditionnelles, et ne nécessitant pas le passage des feuilles émaillées dans un four de pré-cuisson. Cet objectif a été atteint en procédant au bombage dans des conditions qui permettent au cours du processus de maintenir les deux feuilles superposées à distance l'une de l'autre jusqu'à sintérisation de l'émail et l'élimination des constituants de ces émaux qui sont évacués ou détruits au cours du traitement thermique de bombage.

Les deux feuilles de verre dans le procédé selon l'invention sont disposées à distance limitée l'une de l'autre. La distance doit être suffisante pour que l'évacuation des produits volatiles s'effectue rapidement par l'espace laissé libre entre les feuilles. Elle est à l'inverse aussi faible que possible pour éviter les inconvénients qui pourraient résulter d'une distance trop importante, lorsque notamment, après l'élimination des résidus volatiles, les deux feuilles sont ramenées au contact l'une de l'autre. Il est aussi préférable de ne pas trop écarter les deux feuilles pour que les conditions thermiques auxquelles elles sont soumises, que ce soit par rayonnement ou par convection, soient aussi peu différentes que possible.

L'espace entre les feuilles peut être d'autant plus réduit que les motifs émaillés étant situés à la périphérie du vitrage, le cheminement des produits dégagés entre les deux feuilles jusqu'à l'atmosphère du four est relativement rapide même si l'espace entre les feuilles est limité.

En pratique, il est préférable de maintenir la distance à moins de 5cm l'une au-dessus de l'autre et, de préférence, moins de 3cm. Une distance minimum est néanmoins nécessaire qui tient compte en particulier de la géométrie des feuilles, de leurs dimensions et de l'étendue des motifs émaillés. La distance est encore suffisante pour permettre le positionnement des éléments supportant temporairement la feuille supérieure. Fonction de ces considérations la distance n'est pas de préférence inférieure à 5mm, et avantageusement est de 1cm ou plus.

La mise à distance des feuilles ne concerne pas nécessairement toute l'étendue des feuilles. L'important pour la mise en oeuvre du procédé est que l'écartement des feuilles soit réalisé dans les zones susceptibles de présenter les défauts dont il a été question plus haut. En conséquence il peut suffire de faire en sorte que seules les parties portant des motifs émaillés soient l'objet de ces dispositions.

De la même façon la distance entre les feuilles n'est pas nécessairement uniforme sur toute leur étendue. Cette distance peut être modulée en fonction de l'importance des zones émaillées concernées. Par ailleurs le fait de supporter les feuilles très ponctuellement peut conduire à des distances variables en fonction de l'éloignement des points de support. Pour les très grandes feuilles le fléchissement naturel sous l'effet de leur propre poids, alors même que les feuilles ne sont encore ramollies par l'élévation de température, peut conduire à rapprocher les zones des feuilles les plus éloignées des points de support.

Cet effet peut aussi être mis systématiquement en oeuvre pour faire en sorte que les zones centrales des feuilles, qui habituellement ne comportent pas de motifs émaillés soient rapprochées sinon en contact, alors que les bords de ces mêmes feuilles sont écartés.

La différence de distance selon les zones des feuilles est obtenue, par exemple, en supportant ponctuellement en des positions différentes la feuille supérieure et celle reposant sur le cadre. Par exemple encore, sur les cadres articulés, à l'entrée dans le four de bombage la feuille inférieure repose habituellement non seulement à ses extrémités mais aussi aux points d'articulation. Dans ces conditions si la feuille supérieure n'est supportée qu'aux extrémités, elle a tendance à fléchir au centre pour se rapprocher de la feuille portée par le cadre, la portée entre les points de support étant sensiblement plus importante pour cette feuille supérieure.

Les feuilles sont bombées en passant dans le four en suivant un traitement thermique qui s'effectue progressivement. La durée de séjour dans le four tient compte notamment de l'inertie thermique du verre, de la nécessité d'éviter que les feuilles subissent des chocs thermiques trop violents, mais aussi de la cinétique de déformation lorsque la température adéquate est atteinte.

Le processus de montée en température est progressif. Jusqu'à la température de ramollissement. Pour les feuilles de verre les plus habituelles pour constituer ces vitrages, la température de formage se situe entre 550 et 680°C. Lorsque les feuilles de verre atteignent ces températures les constituants organiques des compositions d'émaillage sont totalement détruits, et les émaux sont sintérisés. Ils ne constituent donc plus un risque, et les feuilles préalablement séparées peuvent être réunies.

En pratique, il est préférable de réunir les feuilles aussitôt que possible après l'achèvement de l'élimination des constituants organiques, et avantageusement alors que les motifs émaillés ont été sintérisés. Ceci conduit à maintenir la quasi-totalité de l'étape de formage des feuilles postérieurement à leur réunion. Dans ces conditions les deux feuilles subissent un bombage identique.

La réunion des feuilles après sintérisation permet d'éviter les phénomènes de transfert de la composition d'une feuille à l'autre. En sintérisant, autrement dit en procédant au frittage de l'émail, les caractéristiques cristallographiques de celui-ci sont profondément modifiées. Les compositions utilisées pour ces applications sont telles qu'après sintérisation l'émail ne se ramollit plus aux températures atteintes au cours du bombage. Les motifs adhèrent fermement à la feuille sur laquelle ils sont appliqués, et ne peuvent plus coller à l'autre feuille.

Compte tenu de la cinétique de montée en température de la feuille, de celle de décomposition des résidus organiques et de celle de sintérisation des compositions émaillées, la réunion des feuilles est de préférence effectuée lorsque la température atteint au moins 400°C et de préférence au moins 450°C. La réunion des feuilles ne doit pas de préférence s'effectuer au-delà de 580°C et de préférence pas au-dessus de 550°C.

Les températures auxquelles le déclenchement de la réunion des feuilles est effectué sont bien évidemment dépendantes de la vitesse de montée en température. Plus cette montée en température est rapide, plus l'élimination des résidus organiques et la sintérisation de l'émail, s'achèvent à une température élevée et inversement.

L'invention vise à éviter le traitement de pré-cuisson des motifs émaillés. Le plus habituellement, les feuilles portant ces motifs auront été préalablement séchées, comme indiqué précédemment, à des températures relativement peu élevées. Il est possible également de procéder directement au séchage dans le four de bombage, moyennant des précautions lors de la manipulation des feuilles de telle sorte que les motifs émaillés soient préservés de tout contact à un moment où ils ne sont pas "fixés" sur la feuille.

Les inventeurs ont également développé des moyens permettant la mise en oeuvre du procédé de bombage selon l'invention. Ces moyens consistent en des cadres de bombage comportant des éléments permettant de disposer les deux feuilles de verres de façon superposée, à distance l'une de l'autre, pendant un premier temps, et de rassembler ces deux feuilles dans un deuxième temps.

Une manière de mise en oeuvre consiste à disposer sur un cadre de bombage des éléments supportant la feuille supérieure à sa périphérie. Les éléments sont disposés de telle sorte que la feuille inférieure repose sur le cadre proprement dit, tandis que la feuille supérieure, au début du processus de bombage, repose sur les supports supplémentaires situés au-dessus du cadre.

Les moyens support peuvent être éclipsés le moment venu pour libérer la feuille supérieure qui vient s'appliquer sur la feuille portée par le cadre.

Le contact de la feuille supérieure avec les éléments supports temporaires, est limité à la périphérie immédiate de la feuille pour éviter le risque de marques par contact.

Les supports de la feuille supérieure, peuvent assurer un maintien sur une fraction très limitée de la périphérie en jouant sur la rigidité de la feuille. Le ramollissement, et le formage de la feuille supérieure n'interviennent pratiquement pas ou de façon très limitée, pendant que la feuille repose sur ces supports. L'essentiel, sinon la totalité du "formage", intervient lorsque les feuilles sont réunies et reposent ensembles sur le cadre. Dans ces conditions, l'utilisation d'un support limité ou se limitant à quelques points, ne compromet pas un bon formage.

La commodité de mise en oeuvre de ces moyens support, conduit à préférer des éléments disposés de manière discrète en des points qui assurent le moins de fléchissement de la feuille sous l'effet de son propre poids avant qu'elle n'ait atteint la température de ramollissement.

L'invention est décrite dans la suite en se référant aux planches de dessins annexés dans lesquels :
- la figure 1 est un schéma représentant la circulation dans le four de bombage et les différentes étapes correspondantes du procédé selon l'invention ;
- les figures 2a, 2b, 2c, représentent de façon schématique des vues en élévation de différents moment du processus de bombage selon l'invention ;
- la figure 3 est un graphique représentant un cycle de température dans un four de bombage ;
- la figure 4 représente en vue perspective schématique un mode de réalisation d'un cadre utilisé selon l'invention.

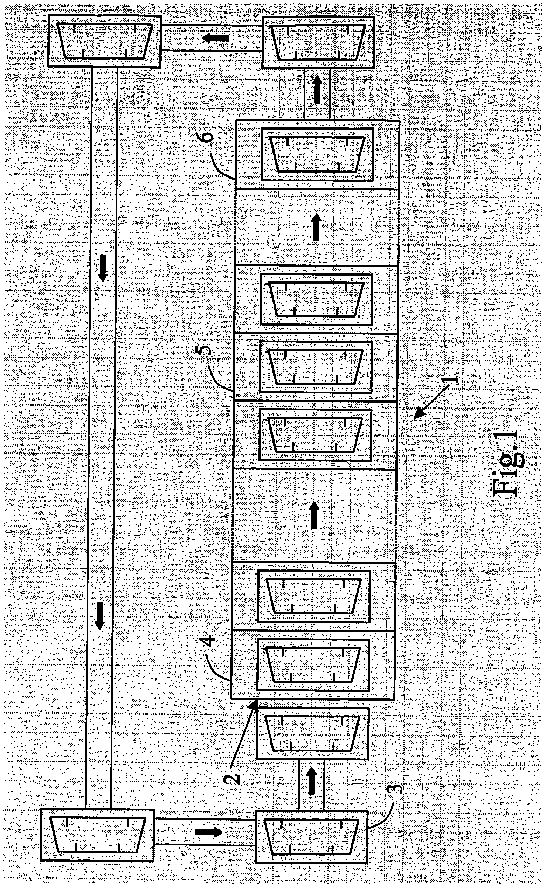

Le schéma de la figure 1 montre le cheminement des feuilles de verre soumises à une opération de bombage par gravité dans un four de type dit "tunnel". Le four est ici désigné globalement 1.

Dans les installations de ce type les feuilles à bomber pénètrent dans le four 1, à une des extrémités de celui-ci 2. Les feuilles sont portées par les cadres de bombage 3 qui circulent de façon continue suivant le trajet indiqué par les flèches. Sur schéma les feuilles de verre n'ont pas été représentées.

Dans les techniques traditionnelles les deux feuilles sont placées simultanément sur le cadre, l'une sur l'autre, et leur contact ne s'effectue que par l'intermédiaire de la poudre de séparation.

Les cadres usuels utilisés pour former des vitrages très incurvés sont habituellement constitués de plusieurs parties articulées pour faciliter l'accompagnement et le support adéquat des feuilles au cours de cette transformation géométrique importante. Les dispositions de l'invention s'appliquent aussi bien aux cadres fixes qu'aux cadres articulés. Elles s'appliquent aussi aux cadres qui comportent des éléments intervenant successivement pour supporter les feuilles au cours du processus de bombage tels que ceux décrits dans la demande EP 885 851. Ces derniers sont mis en oeuvre pour effectuer séparément les courbures dans les deux directions correspondant l'une à la longueur, l'autre à la largeur de ces vitrages.

Il faut remarquer que si plusieurs supports interviennent successivement selon l'invention, ces supports ne concernent pas de façon simultanée les deux feuilles, mais chacune d'entre elles séparément. Les moyens et leurs rôles sont donc différents de ceux de la demande EP 885 851.

Les cadres portant les feuilles progressent dans le four pas à pas comme sur le schéma de la figure 1, ou en continu, et sont soumises dans une première partie 4 à une température qui s'élève de façon continue.

La durée de la montée en température est fonction des caractéristiques particulières à chaque modèle de vitrage. Pour les pare-brise actuels le temps de montée en température pour atteindre le ramollissement du verre varie entre environ 4 et 10 minutes.

Parvenu à ces températures de ramollissement dans la partie 5 du four, la température continue le plus souvent de croître, mais moins rapidement, jusqu'à un palier. Le temps de séjour à ces températures est fonction de l'importance du bombage recherché. Il est d'autant plus long que la courbure est plus forte.

Dans le cas décrit dans la demande EP 885 851, comprenant la formation séparée de courbures suivant deux directions, le déclenchement de la formation de la deuxième courbure s'effectue dans ce temps situé dans la zone de ramollissement. Eventuellement pour procéder à cette courbure séparée, les feuilles sont portées à un deuxième niveau de température supérieur à celui du premier palier.

Lorsque les courbures recherchées sont obtenues, les feuilles sont rapidement ramenées à une température inférieure à la température de ramollissement dans une partie 6 du four, ce qui fige le verre et empêche une déformation ultérieure. Le refroidissement s'effectue rapidement mais sans conduire à une trempe qui n'est pas nécessaire pour les vitrages feuilletés.

Les feuilles de verre bombées sortant du four sont enlevées du cadre pour être ultérieurement assemblées. Les cadres 3 reviennent en position de départ pour une nouvelle opération.

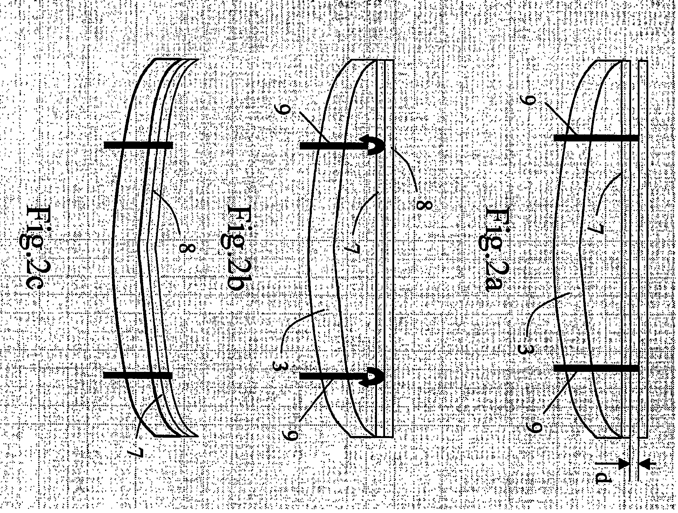

Les figures 2 illustrent le mode de fonctionnement selon l'invention.

La mise en oeuvre de l'invention se distingue de la technique traditionnelle en ce que les feuilles entrant dans le four de bombage sont supportées par le cadre 3 lui-même pour la feuille en position inférieure 7, et par les moyens de support temporaires additionnels 9 pour la feuille en position supérieure 8.

Pour la commodité de la représentation et sa simplicité, le cadre est représenté comme un cadre fixe. Les mêmes dispositions s'appliquent néanmoins lorsqu'il s'agit d'un cadre articulé ou d'un cadre à supports successifs.

La figure 2a montre la disposition des deux feuilles telle qu'elle se présente à l'entrée dans le four. La feuille inférieure 7, repose aux extrémités 10 du cadre 3, tandis que la feuille 8 est supportée par les éléments 9. Dans cette disposition les deux feuilles sont maintenues séparées l'une de l'autre à distance d. Leur rigidité relative fait que, même supportées ponctuellement, comme représenté, les feuilles ne sont pas en contact.

Cette disposition est maintenue comme indiqué précédemment aussi longtemps qu'il est nécessaire pour sintériser l'émail et évacuer les produits de dégradation des composants organiques des motifs émaillés. Ces motifs, en position Il sont situés sur la feuille inférieure 7, sur la face tournée vers le haut, tandis que les couches fonctionnelles sont portées par la feuille supérieure 8, et sur la face tournée vers le bas.

Lorsque l'émail est sintérisé et tous les composants organiques éliminés, les supports 9 sont escamotés simultanément. La feuille 8 libérée vient s'appliquer sur la feuille 7 (figure 2b). Cette opération est effectuée avant que le ramollissement des feuilles ait conduit à une déformation significative de celles-ci, de telle sorte que les deux feuilles présentent bien le même profil et s'appliquent sur toute leur surface.

La figure 2c correspond à la fin du processus de bombage. Les deux feuilles 7 et 8 ont fléchi, et viennent reposer sur la périphérie du cadre 3. Leur pourtour correspond alors exactement au profil imposé par la forme du cadre.

Pour les cadres articulés, le mécanisme est le même, mais la feuille de verre 7 repose habituellement non seulement aux extrémités 10, mais également en des points correspondant aux extrémités de la partie fixe du cadre et/ou aux points où les éléments mobiles se raccordent à la partie fixe. Mais dans les deux cas, le même type de support pour la feuille supérieure peut être mis en oeuvre.

Les figures 2 montrent les supports 9 ponctuels. L'avantage de cette configuration est qu'elle minimise le contact de la feuille supérieure avec ces éléments. Si leur contact peut entraîner une légère marque sur la couche fonctionnelle, celle-ci demeure pratiquement imperceptible étant masquée par les parties émaillées, et surtout, ces marques ne modifient en rien la fonctionnalité de la couche.

Si exceptionnellement il est nécessaire de maintenir les feuilles séparées alors qu'elles atteignent les températures de ramollissement, les supports 9 doivent s'appliquer sur une partie significative de la périphérie de la feuille 8 ou, au moins, en des points suffisamment rapprochés les uns des autres pour maintenir convenablement la feuille 8 à distance de la feuille 7 sur toute leur périphérie. La multiplicité des points de support est néanmoins un facteur de complication qu'il est préférable d'éviter.

Le déclenchement de l'escamotage des moyens supports 9, est avantageusement obtenu par un jeu de tringles et barres non représenté, lesquelles sont actionnées au moment voulu dans la progression des cadres. Un mode de déclenchement consiste en un poussoir solidaire des barres et tringles. Au passage au niveau approprié, un piston vient appuyer sur le poussoir qui fait pivoter les tringles. La rotation des tringles entraîne un déplacement latéral des extrémités des supports 9 vers l'extérieur de la feuille 8 qui, libérée de son support, vient s'appliquer sur la feuille 7 disposée immédiatement en dessous.

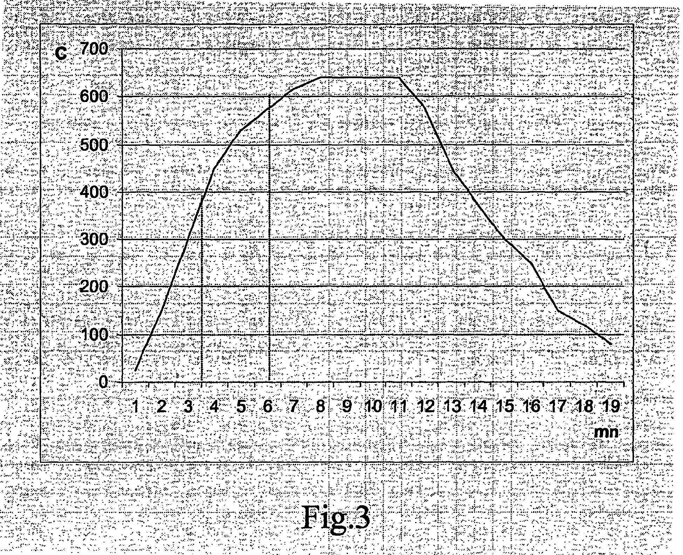

La figure 3 illustre le déroulement du processus du bombage selon l'invention en fonction du cycle thermique imposé au pare-brise. Le graphique de la figure 3 montre l'évolution de la température de la feuille dans le temps, tout au long du séjour dans le four de bombage.

Dans l'exemple choisi les deux feuilles de verre traitées sont formées de verre clair de 2,6mm d'épaisseur.

Ce cycle de traitement est celui imposé à des vitrages comportant en face II un motif émaillé recouvrant principalement le pourtour du vitrage sur une bande d'environ 8cm de largeur, de même que, en partie haute, et au milieu de celle-ci, une extension de la bande émaillée destinée à masquer les emplacements respectifs de l'embase du rétroviseur, et les éléments associés à la présence d'un détecteur de pluie.

La composition d'émail appliquée, est celle vendue sous les références commerciales "RD479 MS089 » par la société Johnson Matthey. La viscosité de la composition est ajustée au moyen du diluant de référence 726-80, de la même société, pour établir la viscosité à 19 Pa.s. La composition appliquée par sérigraphie forme un film de 20µ d'épaisseur à l'état humide.

Le film est séché par passage pendant 70 secondes dans un four de pré-séchage maintenu à 250°C. Après ce séchage les feuilles sont dirigées vers le four de bombage pour être appariées avec les feuilles portant les couches fonctionnelles.

Les couches fonctionnelles sont du type réfléchissant les rayonnements infrarouges. Il s'agit d'un ensemble de couches tel que ceux qui font l'objet du brevet EP 336 257. Ces couches comprennent deux couches d'argent, encadrées et séparées par des couches d'oxydes diélectriques qui limitent la réflexion du rayonnement visible. Les couches diélectriques ont aussi un rôle protecteur pour les couches d'argent. Elles permettent encore d'ajuster les couleurs en réflexion qui commandent l'apparence de ces vitrages.

L'ensemble des couches est situé sur la face de la feuille qui correspond à la face III dans le vitrage final.

Dans le chargement des moules de bombage, la feuille portant les motifs émaillés préalablement séchés, est disposée sur les points d'appui du moule proprement dit comme montré en 2a, les motifs étant sur la face qui n'est pas en contact avec le moule. La feuille portant les couches fonctionnelles est placée sur les éléments supports, face fonctionnelle tournée vers le bas. Les feuilles sont distantes de 20mm.

La température reportée est celle mesurée au centre du vitrage. Les écarts de température avec les bords extrêmes sont aussi faibles que possible. Dans les essais réalisés, la température des deux côtés était légèrement inférieure à celle du centre dans la phase de montée en température. L'écart ne dépasse pas 20°C.

La montée en température est rapide. Elle est d'environ 500°C après 3mn30. Le palier de température d'environ 630°C est atteint après 6mn. Cette température est maintenue pendant 4mn. La fin du cycle comporte un refroidissement également rapide la température de 500°C étant repassée moins de deux minutes après la fin du palier.

Sur le graphique sont reportés les lignes verticales délimitant les zones dans lesquelles de préférence, selon l'invention, les éléments support sont écartés pour libérer la feuille supérieure qui vient s'appliquer sur la feuille inférieure. Dans l'exemple les deux extrêmes délimitant cette zone correspondent approximativement aux températures de 400°C et 580°C.

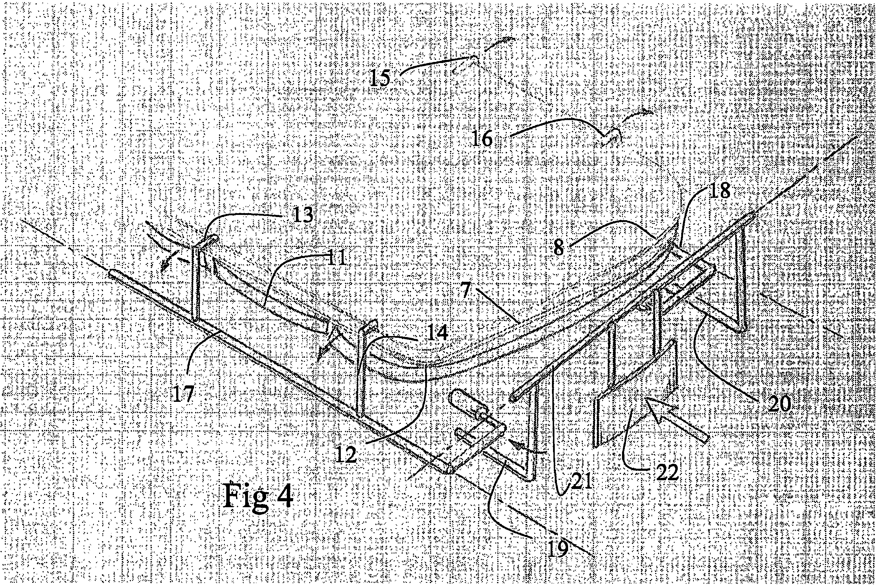

La figure 4 montre de manière schématique un mode de réalisation d'un cadre utilisable pour la mise en oeuvre de l'invention.

Le cadre présenté est du type articulé. Il comprend des éléments fixes dans les directions longitudinales 11, et des parties latérales 12, mobiles en rotation. Les côtés du cadre sont destinés à se relever sous l'effet des contrepoids non représentés lorsque le verre se ramollit et n'exerce plus une pression suffisante sur les extrémités latérales. Ce type de cadre est utilisé pour les vitrages comportant une courbure relativement importante dans la longueur du vitrage.

Les éléments support de la feuille supérieure 13, 14, 15, 16 sont situés de part et d'autre des plus grandes dimensions du vitrage. Leur position est telle que la feuille subisse le moins possible de fléchissement sous l'effet de son propre poids à froid. La représentation comporte 4 points de support. Si les feuilles sont de grandes dimensions, il peut être préférable de compléter le dispositif par d'autres points supplémentaires suivant le même principe de fonctionnement.

Le dispositif présenté ne comporte pas de points supports sur les petits côtés du vitrage. Si les dimensions le justifient, le même type de support peut être utilisé également le long de ces petits côtés.

Les supports sont constitués de tiges sensiblement verticales, coudées à leurs extrémités. Ces tiges sont soudées aux tringles 17 et 18. Ces tringles constituent un axe de rotation qui permet de déplacer les supports dans le sens indiqué par les flèches, au moment choisi pour appliquer la feuille supérieure sur celle qui repose sur le cadre.

Le mouvement des tringles 17 et 18 est assuré par le jeu de barres 19 et 20. Les barres 19 et 20 sont, elles-mêmes, fixées sur l'axe 21 mis en rotation à partir du mouvement communiqué par le poussoir 22.

En appuyant sur le poussoir 22, le mouvement communiqué relève les barres 19, 20, fait pivoter les tringles 17, 18, et basculer les supports verticaux, 13, 14, 15, 16 et libère la feuille supérieure.

## Revendications

1. Procédé de bombage sur cadre de feuilles de verre destinées à être assemblées pour constituer un vitrage feuilleté, l'une des feuilles au moins portant des motifs de composition d'émaillage non préalablement sintérisés, l'autre feuille portant des couches fonctionnelles, les motifs émaillés et les couches fonctionnelles étant sur les faces des feuilles au contact l'une de l'autre, **caractérisé en ce que**, au cours du passage dans le four de bombage, dans un premier temps, les feuilles sont disposées l'une au-dessus de l'autre en maintenant un espacement entre elles pendant au moins toute la période correspondant à la sintérisation sous l'effet de l'accroissement de la température, puis, avant d'atteindre la température de ramollissement des feuilles, celles-ci sont replacées directement l'une sur l'autre pour le reste du bombage.

2. Procédé selon la revendication 1 dans lequel, dans le premier temps, les feuilles sont maintenues à une distance l'une de l'autre qui n'excède pas 5cm.

3. Procédé selon la revendication 1 dans lequel, dans le premier temps, les feuilles sont maintenues à une distance l'une de l'autre qui n'excède pas 3cm.

4. Procédé selon l'une des revendications précédentes dans lequel, dans le premier temps, la distance séparant les feuilles n'est pas inférieure à 5mm.

5. Procédé selon l'une des revendications précédentes dans lequel, dans le premier temps, la distance séparant les feuilles n'est pas inférieure à 10mm.

6. Procédé selon l'une des revendications précédentes dans lequel les feuilles sont replacées l'une sur l'autre à une température qui n'est pas supérieure à 580°C.

7. Procédé selon l'une des revendications précédentes dans lequel les feuilles sont replacées l'une sur l'autre à une température qui n'est pas supérieure à 550°C.

8. Procédé selon l'une des revendications précédentes dans lequel les feuilles sont replacées l'une sur l'autre à une température qui n'est pas inférieure à 400°C.

9. Procédé selon l'une des revendications précédentes dans lequel les feuilles sont replacées l'une sur l'autre à une température qui n'est pas inférieure à 450°C.

10. Procédé selon l'une des revendications précédentes, dans lequel la feuille portant la composition d'émaillage est soumise directement au processus de bombage directement après application de ces motifs.

11. Procédé selon l'une des revendications 1 à 8 dans lequel la feuille portant la composition d'émaillage est soumise à un séchage préalable au bombage, la température et le temps de séchage, étant insuffisants pour éliminer la totalité des constituants organiques.

12. Cadre de bombage pour la mise en oeuvre du procédé selon l'une quelconque des revendications précédentes, comprenant, en plus du cadre présentant en fin d'opération le profil du vitrage souhaité, cadre qui au début du processus de bombage supporte une des deux feuilles, des éléments permettant de supporter la deuxième feuille de verre à distance et au-dessus de la première feuille, pendant une première partie du temps, puis, dans un deuxième temps ces mêmes moyens pouvant être écartés pour relâcher la deuxième feuille de verre qui vient alors s'appliquer sur la première.

13. Cadre selon la revendication 12 dans lequel les éléments de supports sont disposés à la périphérie de la feuille supportant la feuille sur au moins une partie de la périphérie, de manière que la feuille supérieure ne fléchisse pratiquement pas et maintienne sur l'ensemble de sa surface une distance suffisante avec la feuille inférieure.

## Claims

1. Process for bending glass sheets on a frame, said glass sheets being intended to be assembled to form a laminated glazing unit, wherein at least one of the sheets bears enamelling composition patterns that have not been firstly sintered, the other sheet bearing functional layers, such that the enamelled patterns and functional layers are on the faces of the sheets in contact with one another, **characterised in that** during passage through the bending furnace, the sheets are disposed one above the other in a first stage, so that a space is maintained between them for at least the entire period corresponding to sintering under the effect of the increase in temperature, then before the softening temperature of the sheets has been reached, these are repositioned to lie directly one above the other for the remainder of the bending operation.

2. Process according to Claim 1, wherein in the first stage the sheets are held at a distance from one another that does not exceed 5 cm.

3. Process according to Claim 1, wherein in the first stage the sheets are held at a distance from one another that does not exceed 3 cm.

4. Process according to one of the preceding claims, wherein in the first stage the distance separating the sheets is not less than 5 mm.

5. Process according to one of the preceding claims, wherein in the first stage the distance separating the sheets is not less than 10 mm.

6. Process according to one of the preceding claims, wherein the sheets are repositioned to lie one above the other at a temperature that is not higher than 580°C.

7. Process according to one of the preceding claims, wherein the sheets are repositioned to lie one above the other at a temperature that is not higher than 550°C.

8. Process according to one of the preceding claims, wherein the sheets are repositioned to lie one above the other at a temperature that is not lower than 400°C.

9. Process according to one of the preceding claims, wherein the sheets are repositioned to lie one above the other at a temperature that is not lower than 450°C.

10. Process according to one of the preceding claims, wherein the sheet bearing the enamelling composition is subjected to the bending process directly after application of these patterns.

11. Process according to one of Claims 1 to 8, wherein the sheet bearing the enamelling composition is subjected to a drying operation prior to bending, wherein the drying temperature and duration are not sufficient to eliminate all organic constituents.

12. Bending frame for implementing the process according to any one of the preceding claims, which, in addition to the frame having the desired profile of the glazing at the end of the operation, said frame supporting one of the two sheets at the start of the bending process, comprises elements enabling the second glass sheet to be supported at a distance from and above the first sheet in a first stage, then in a second stage these same elements can be moved apart to release the second glass sheet, which then comes to rest on the first sheet.

13. Frame according to Claim 12, wherein the support elements are disposed on the periphery of the sheet to support the sheet on at least a portion of the periphery such that the upper sheet hardly flexes and maintains an adequate distance from the lower sheet over its entire surface.

## Patentansprüche

1. Verfahren zum Rahmenbiegen von Glastafeln, die dafür bestimmt sind, zusammengefügt zu werden, um ein Verbundglas zu bilden, wobei mindestens eine der Tafeln Motive aus einer Emaillezusammensetzung trägt, die nicht im Voraus gesintert worden sind, und die andere Tafel Funktionsschichten trägt, wobei die emaillierten Motive und die Funktionsschichten auf den miteinander in Kontakt befindlichen Flächen der Tafeln sind, **dadurch gekennzeichnet, dass** während des Durchlaufs im Biegeofen zunächst bzw. während einer ersten Zeitspanne die Tafeln übereinanderliegend sind, wobei zwischen ihnen mindestens während der gesamten Periode, die dem Sintern unter dem Einfluss des Anstiegs der Temperatur entspricht, ein Zwischenraum beibehalten wird, dann, vor dem Erreichen der Erweichungstemperatur der Tafeln, diese für den Rest des Biegens wieder direkt aufeinandergelegt werden.

2. Verfahren nach Anspruch 1, bei dem zunächst die Tafeln in einem Abstand voneinander gehalten werden, der 5 cm nicht überschreitet.

3. Verfahren nach Anspruch 1, bei dem zunächst die Tafeln in einem Abstand voneinander gehalten werden, der 3 cm nicht überschreitet.

4. Verfahren nach einem der vorhergehenden Ansprüche, bei dem zunächst der Abstand, der die Tafeln voneinander trennt, nicht kleiner als 5 mm ist.

5. Verfahren nach einem der vorhergehenden Ansprüche, bei dem zunächst der Abstand, der die Tafeln voneinander trennt, nicht kleiner als 10 mm ist.

6. Verfahren nach einem der vorhergehenden Ansprüche, bei dem die Tafeln bei einer Temperatur, die nicht höher als 580 °C ist, wieder aufeinandergelegt werden.

7. Verfahren nach einem der vorhergehenden Ansprüche, bei dem die Tafeln bei einer Temperatur, die nicht höher als 550 °C ist, wieder aufeinandergelegt werden.

8. Verfahren nach einem der vorhergehenden Ansprüche, bei dem die Tafeln bei einer Temperatur, die nicht niedriger als 400 °C ist, wieder aufeinandergelegt werden.

9. Verfahren nach einem der vorhergehenden Ansprüche, bei dem die Tafeln bei einer Temperatur, die nicht niedriger als 450 °C ist, wieder aufeinandergelegt werden.

10. Verfahren nach einem der vorhergehenden Ansprüche, bei dem die Tafel, die die Emailzusammensetzung trägt, unmittelbar nach dem Aufbringen dieser Motive direkt dem Biegeverfahren unterworfen wird.

11. Verfahren nach einem der Ansprüche 1 bis 8, bei dem die Tafel, die die Emaillezusammensetzung trägt, vor dem Biegen einem Trocknen unterworfen wird, wobei die Temperatur und die Dauer des Trocknens nicht ausreichen, um die Gesamtheit der organischen Bestandteile zu beseitigen.

12. Biegerahmen für die Durchführung des Verfahrens nach einem der vorhergehenden Ansprüche, umfassend, zusätzlich zu dem Rahmen, der am Ende des Arbeitsgangs das gewünschte Glasprofil aufweist, einen Rahmen, der zu Beginn des Biegeverfahrens eine der zwei Tafeln stützt, Elemente, die ermöglichen, die zweite Glastafel in einem Abstand und über der ersten Tafel zu halten, während einer ersten Zeitspanne, wobei dann, zu einem späteren Zeitpunkt, bzw. in einer späteren Zeitspanne, diese Mittel entfernt werden können, um die zweite Glastafel freizugeben, die daraufhin auf der ersten zu liegen kommt.

13. Rahmen nach Anspruch 12, bei dem die Stützelemente am Umfang bzw. Rand der Tafel angeordnet sind, wobei sie die Tafel auf mindestens einem Teil des Umfangs stützen, derart dass die obere Tafel sich praktisch nicht durchbiegt und über der Gesamtheit ihrer Oberfläche einen ausreichenden Abstand zur unteren Tafel beibehält.
